# EUROPEAN PATENT APPLICATION

(11) **EP 1 707 456 A1**
(43) Date of publication of application: **04.10.2006**
(21) Application number: 06001571.6
(22) Date of filing: 26.01.2006
(51) Int. Cl.: B60R 25/00

(54) **Mechanical antiheft device for vehicles**

(30) Priority: 01.04.2005 IT MI20050109
(71) Applicant: TAVOLA S.p.A., 20141 Milano (IT)
(72) Inventor: Re, Gianpaolo, 20121 Milan (IT)
(74) Representative: La Ciura, Salvatore

(57) **Abstract**

This invention concerns a mechanical antitheft device of the kind comprising a couple of clamps, each of them solidly connected with respective tubular arms sliding from an opening position, which allows the insertion of the device on a tyre, to an operating position in which the clamps are tightened around the said tyre and the respective rim, as well as a handle, solidly connected with one of the said arms, which projects with respect to the antitheft device, provided with a locking system consisting of locking means, connected to one arm, made in such a way as to engage at least one hole of a series of aligned holes made along a side of the other sliding tubular arm. In particular, the said locking means comprise a stem which is solidly connected with a block lodged into a handle which is, in turn, solidly connected with one of the arms and which can be inserted into a hole made in the second arm.

The block is subject to the action of elastic means which push it in the closing position of the device and which can be closed forward by a key to unlock the stem from the said holes.

## Description

This invention concerns a mechanical antitheft device for vehicles, consisting of a couple of clamps to be tightened around a motor-car wheel, in order to block it in such a way as to prevent the motor-car from being removed.

The clamps are solidly connected with as many arms sliding over each other in such a way as to let the device open and close, to be fitted on a wheel, and to adjust the antitheft device to the wheels size.

This invention provides also for means suitable to lock the device in closing position, which device is provided with a handle solidly connected with an arm which projects in such a way as to create an additional obstacle to the wheel rotation to which the said arm is fitted to.

It is well known that, the numerous car thefts drive the car owners to equip themselves with antitheft devices, in order to reduce the risk that their vehicle can be stolen by a thief.

In the wide range of typologies of antitheft devices available on the market, the mechanical antitheft devices offer, compared to the electronic ones, substantial guarantees of proper functioning. The visual impact due to the considerable size of the mechanical devices often discourages potential thieves.

In addition to the foregoing, such devices need neither a supply system nor maintenance, thus resulting very simple and economical, both as regards their production and use.

It is known from the patent WO96/17755 an antitheft device consisting of a couple of clamps equipped with as many arms which can be inserted one into the other, where one of the said arm is solidly connected with a rack, the toothing of which is engaged by a cam which is solidly connected with a stem fitted on the other arm, with the possibility of turning around its axis.

The patent also provides that a clamp, beside sliding, can also turn around a wheel axis in order to make the insertion thereof easier.

It is also known from US patent 5247815 an antitheft device consisting of a couple of clamps to be tighten around a wheel, solidly connected with as many arms which can be inserted one into the other in order to open and close the system. The locking system is equipped with one of the arms which is solidly connected with the clamps, inside of which two opposite toothings are fitted, which are engaged by an element activated by a key, to lock the clamps in closing position.

These known devices, even though very effective and simple to use, can be subject to further improvements, since their locking devices, as we have noted above, are rather complex and therefore difficult to manufacture; it comes therefrom that also the production costs, proportional to the construction complexity, have their importance in the industrialisation process.

This invention falls into this sector, by overcoming these disadvantages and proposing a mechanical antitheft device to be applied to the tyre and to the respective rim of a vehicle, equipped with a locking system very simple and economical to produce.

The device consists of a couple of opposite clamps, which are solidly connected with as many arms sliding one over each other, in such a way that the said clamps can be moved from an open position, which allows the insertion of the wheel, to an operating position in which the said clamps tighten around the tyre and the respective rim.

The device provides for a simplified locking device of the clamps in closed or operating position, since one arm is provided with a series of aligned holes positioned in such a way as to be engaged by a corresponding small piston placed inside a handle, which is solidly connected with the other arm, where such small piston is activated by a key-locked cylinder, which is also lodged into the said handle.

These and other characteristics will be made clearer by the following description and by the drawings annexed hereto, in which:
- figure 1 is a view of the antitheft device according to this invention;
- figure 2 represents, respectively, in longitudinal and cross section, a supporting arm of one of the two clamps of figure 1;
- figure 3 represents, respectively, in longitudinal and cross section, the other supporting arm, which slides inside the arm of figure 2;

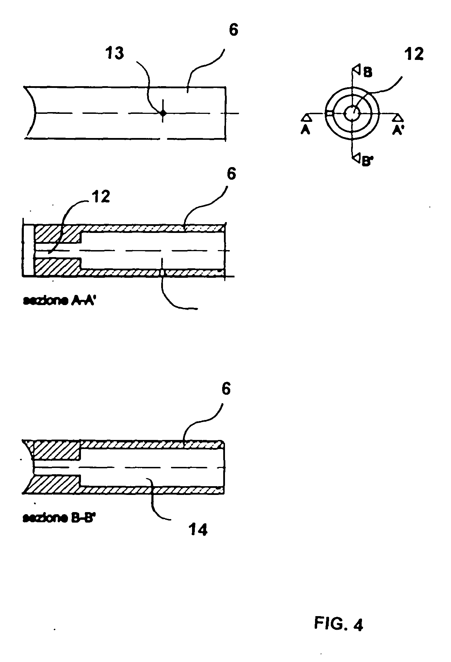

- figure 4 represents the handle of the device of figure 1 according to a frontal view, two longitudinal sections and one transversal section.

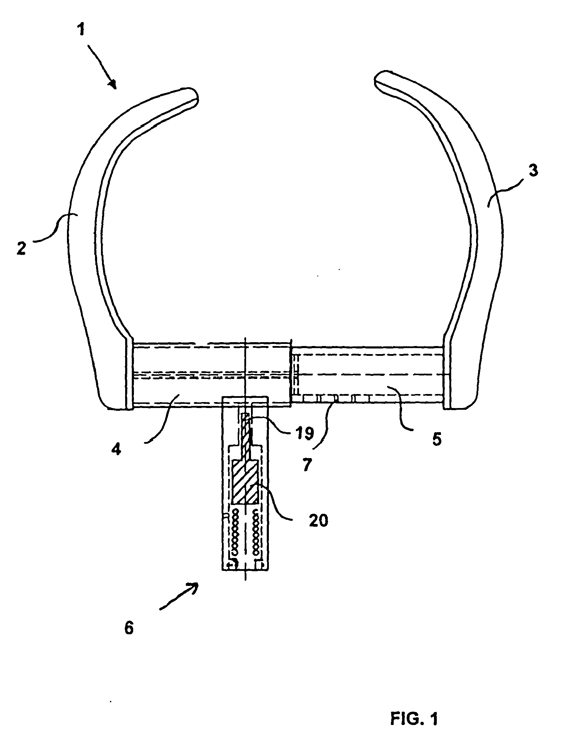

With reference to figure 1, 1 indicates an antitheft device as a whole, composed of 2 clamps 2 and 3 which are solidly connected respectively (2 in figure 1) one with an external tubular arm 4 and the other with a tubular arm 5 which slides into the arm 4 from an opening position of the device, which allows the insertion on a tyre, to an operating position in which the clamps 2 and 3 are tighten around the tyre and the respective rim of a vehicle.

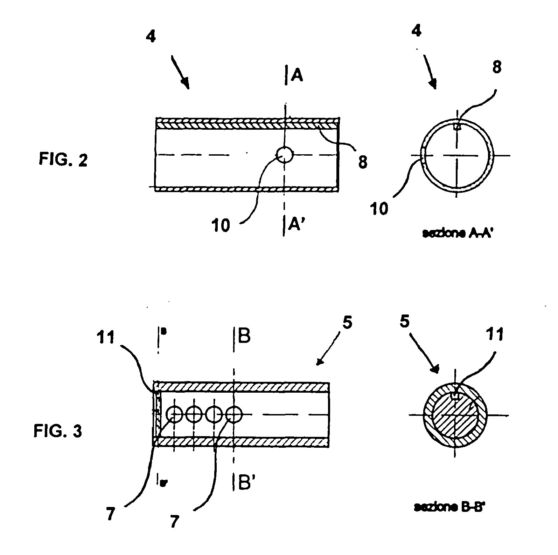

The tubular arm 5 is provided with a series of locking holes 7 (figure 3), aligned along a direction which is parallel to the longitudinal axis, made in such a way as to be engaged by the stem 19 of a block 20, which slides into a cylinder located inside a handle 6 orthogonally fixed to the other tubular arm 4.

The internal surface of the external tubular arm 4 is provided with a raised slide 8 (figure 2) made in such a way as to be fitted inside a corresponding slot 11 (figure 3) obtained on the wall of the tubular arm 5.

The said slide 8 prevents, during the sliding of an arm over the other, the two clamps 2 and 3 from rotating around the sliding axis.

The handle 6 is provided with a sliding axial cavity 12 for sliding the stem 19 inside of it, made in such a way as to engage one of the holes 7 when one of the said holes or cavities is in a position corresponding to the said stem.

To this purpose a hole 10 is made on the arm 4, just close to the said cavity 12 for the passage of the locking stem of the antitheft device in the operating position.

An axial cavity 14 inside the handle 6 is made in order to lodge in its inside the locking cylinder 20, which is subject to the action of elastic means, such as a spring or the like, which push it until the stem 19 is inserted into the holes 12 and 7 of the arms 4 and 5.

Snap-lock systems lock in position the stem 19 after the said stem is inserted into the holes 7, while a key shall be used for locking and then closing the stem 19.

The block and the respective locking system are already known as such, and therefore a detailed description is not required.

Finally, an additional hole 13 is made on the handle 6 in order to fit into its inside a stroke-end pin made in such a way as to engage the locking cylinder 20 and prevent it from withdrawing from the handle.

The two opposite clamps have an extended shape with a certain curvature towards the inside of the device in order to duly fit to the circular shape of the tyre.

According to a preferred embodiment of the invention, one clamp has a length and/ or curvature which is higher than or, however, different from the other, with a resulting distal end closer than the inside of the device; this way the device can better fitted to the wheel if, for example, from the internal side, the presence of mechanical parts of the vehicle, such as brake callipers, reduce the area required for inserting the clamp.

The functioning is the following.

Take the device in the opening position by the handle 6, and insert it around a tyre of the vehicle and the respective rim, in such a way that the tubular arms 4 and 5 rest on the tyre tread; tighten the clamps in such a way that these surround the sides of the wheel, and tighten with the free ends also the rim.

In this position, act on the locking cylinder inside the handle, in order to engage the locking piston against one of the holes or cavities 7 made on the sliding arm 5, and to prevent the arms from sliding one on the other.

When the device is locked in the said position, the complete rotation of the wheel shall be obstructed, since the device, thanks also to the projecting handle, creates an impediment which prevents the wheel for freely rotating.

A device according to this invention therefore offers a locking system which is easier to produce compared to those of the known devices, being at the same time effective against any burglary attempts.

## Claims

1. Mechanical antitheft device of the kind comprising a couple of clamps each solidly connected with respective tubular arms sliding from an opening position, which allows the insertion of the device on a tyre, to an operating position in which the clamps are tightened around the said tyre and the respective rim, as well as a handle, which is solidly connected with one of the said arms, which projects with respect to the antitheft device, **characterised in that** it provides for a locking system consisting of locking means, connected to one arm, made in such a way as to engage at least one hole of a series of aligned holes made along a side of the other sliding tubular arm.

2. Mechanical antitheft device according to the claim 1, **characterised in that** the said locking means consist of a stem which is solidly connected with a block lodged into a seat which is, in turn, solidly connected with one of the arms and made in such a way as to be inserted in a hole made in the other arm.

3. Mechanical antitheft device according to the claim 1, **characterised in that** the said stem is solidly connected with a block lodged into a handle which is solidly connected with an arm and is subject to the action of elastic means which push it until it is inserted in the holes made in the other arm, provided with key-activated means, made in such a way as to close forward the said block and to unlock the said stem from the said holes.

4. Mechanical antitheft device according to the claim 3, **characterised in that** the said locking means are lodged inside the handle.

5. Mechanical antitheft device according to any of the preceding claims, **characterised in that** the said arms are provided with means made in such a way as to prevent the respective clamps from rotating.

6. Mechanical antitheft device according to the preceding claim, **characterised in that** the said means comprise a relief along a side of an arm made in such a way as to be inserted in a corresponding slot made in the other arm.

7. Mechanical antitheft device according to any of the preceding claims, wherein one clamp has a length and/or curvature different from the others.
